(19) Europäisches Patentamt / European Patent Office / Office européen des brevets

(11) **EP 3 198 813 B1**

(12) **EUROPEAN PATENT SPECIFICATION**

(45) Date of publication and mention
of the grant of the patent:
**06.09.2023 Bulletin 2023/36**

(21) Application number: **14776609.1**

(22) Date of filing: **22.09.2014**

(51) International Patent Classification (IPC):
**H04L 47/2475** *(2022.01)*    **H04L 47/62** *(2022.01)*
**H04W 8/04** *(2009.01)*

(52) Cooperative Patent Classification (CPC):
**H04L 47/2475; H04L 47/6215;** H04W 8/04

(86) International application number:
**PCT/EP2014/070077**

(87) International publication number:
**WO 2016/045690 (31.03.2016 Gazette 2016/13)**

(54) **METHOD, APPARATUS AND SYSTEM**

VERFAHREN, VORRICHTUNG UND SYSTEM

PROCÉDÉ, APPAREIL ET SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.08.2017 Bulletin 2017/31**

(73) Proprietor: **Nokia Solutions and Networks Oy
02610 Espoo (FI)**

(72) Inventors:
• **VIERING, Ingo
81549 Munich (DE)**
• **ZANIER, Paolo
81479 Munich (DE)**
• **SARTORI, Cinzia
80634 Munich (DE)**

(74) Representative: **Nokia EPO representatives
Nokia Technologies Oy
Karakaari 7
02610 Espoo (FI)**

(56) References cited:
**EP-A2- 1 434 131        US-A1- 2005 286 438
US-A1- 2011 235 630     US-A1- 2012 140 633
US-A1- 2012 327 779**

## Description

The present application relates to a method, apparatus and system and in particular but not exclusively, to Quality of Service scheduling in mobile and cellular communication systems.

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communications may comprise, for example, communication of data for carrying communications such as voice, electronic mail (email), text message, multimedia and/or content data and so on. Non-limiting examples of services provided include two-way or multi-way calls, data communication or multimedia services and access to a data network system, such as the Internet.

In a wireless communication system at least a part of communications between at least two stations occurs over a wireless link. Examples of wireless systems include public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user is often referred to as user equipment (UE). A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. An example of attempts to solve the problems associated with the increased demands for capacity is an architecture that is known as the long-term evolution (LTE) of the Universal Mobile Telecommunications System (UMTS) radio-access technology. The LTE is being standardized by the 3rd Generation Partnership Project (3GPP). The various development stages of the 3GPP LTE specifications are referred to as releases.

US2012140633 discloses a mechanism for operating a communication device for scheduling transmission of data packets. According to the mechanism, data packets are received from a communication network; applications associated with the data packets are determined; each of the data packets is inserted into one of a plurality of data queues; scheduler parameters for the data queues are determined, the scheduler parameters including factors that are based on the applications associated with the data packets in the corresponding data queues; the data packets from the data queues are scheduled to an output queue taking into account the scheduler parameters, and the data packets from the output queue are transmitted to the communication network.

US2012327779 discloses a mechanism for operating a communication device for scheduling transmission of data packets. According to the mechanism, data packets are received from a communication network; one or more connections associated with the received data packets are monitored to detect characteristics of the connections; each of the data packets is inserted into one of a plurality of data queues; information about congestion effecting communication of the data packets is detected; scheduler parameters for the data queues are determined, the scheduler parameters including factors based on the detected information about congestion and the detected characteristics associated with the data packets in the corresponding data queues; the data packets from the data queues are scheduled for transmission taking into account the scheduler parameters, and the data packets are transmitted based on the scheduling.

US2005286438 discloses a mechanism for providing cross-layer quality-of-service (QoS) functionality in a wireless network. According to the mechanism, QoS data is obtained from each layer of an application stack for a particular application. A QoS matrix is then generated based on the obtained QoS data and packet distribution for the particular application may then be prioritized based on the QoS matrix.

US2011235630 discloses techniques, at a subscriber station, for assigning packets to queues to prioritize real-time content over non-real time content. Packets with the same connection identifier are assigned to different priority queues. Block sequence numbers are assigned to packets after storage of packets to queues based on priority.

EP1434131 discloses a mechanism for controlling the operation of a terminal equipment. According to the mechanism, at least two applications are activated to utilize a common communication link for connections, whereby priorities for said applications are defined via a user interface, a portion of the capacity of said communication link is allocated to said connections, the size of the portion allocated to the respective connections depending on the priorities of the applications, and the traffic of the respective connections is adjusted according to the portion of the communication link allocated to the connections.

The invention is defined in the appended independent claims 1, 10, 12, 13 and 14, with additional advantageous embodiments as set out in the dependent claims.

In a first aspect there is provided a method comprising, for a plurality of applications, at least one queue associated with a respective application, enabling quality of service information associated with the respective application to be provided to a base station.

Enabling quality of service information associated with the respective application to be provided to the base station comprises enabling quality of service information associated with the at least one queue to be provided to the base station.

The method comprises causing quality of service information associated with the respective application to be provided to the base station.

The method comprises enabling quality of service information associated with the respective application to be provided to a scheduler in the base station. Quality of service information may comprise buffer information.

Quality of service information commprises head of line delay information.

The method may comprise receiving a scheduling grant for the at least one queue from the base station.

The method may comprise causing quality of service information to be sent after receiving a scheduling grant for the at least one queue.

The method may comprise causing quality of service information to be sent when there is a change in the at least one queue.

The method may comprise causing quality of service information to be sent when data arrives in the at least one queue.

The method may comprise causing quality of service information to be sent when a head of line data packet is discarded.

The method may comprise causing quality of service information to be sent with scheduled data.

The method may comprise causing quality of service information to be sent in a dedicated message.

The method may comprise causing quality of service information to be sent with a buffer status report.

In a second aspect there is provided a method comprising, for a plurality of applications, at least one queue associated with a respective application, receiving, at a base station, quality of service information associated with the respective application.

Receiving quality of service information associated with the respective application to be provided to the base station comprises receiving, at the base station, quality of service information associated with the at least one queue.

The method may comprise receiving, at a scheduler in the base station, quality of service information associated with the respective application.

Quality of service information may comprise buffer information.

Quality of service information comprises head of line delay information.

The method may comprise causing a scheduling grant for the at least one queue to be sent.

The method may comprise receiving quality of service information after causing a scheduling grant for the at least one queue to be sent.

The method may comprise receiving quality of service information when there is a change in the at least one queue.

The method may comprise receiving quality of service information when data arrives in the at least one queue.

The method may comprise receiving quality of service information when a head of line data packet is discarded.

The method may comprise receiving quality of service information with scheduled data.

The method may comprise receiving quality of service information in a dedicated message.

The method may comprise receiving quality of service information with a buffer status report.

In a third aspect there is provided an apparatus, said apparatus comprising means for, for a plurality of applications, at least one queue associated with a respective application, enabling quality of service information associated with the respective application to be provided to a base station.

Means for enabling quality of service information associated with the respective application to be provided to the base station may comprise means for enabling quality of service information associated with the at least one queue to be provided to the base station.

The apparatus may comprise means for causing quality of service information associated with the respective application to be provided to the base station.

The apparatus may comprise means for enabling quality of service information associated with the respective application to be provided to a scheduler in the base station.

Quality of service information may comprise buffer information.

Quality of service information comprises head of line delay information.

The method may comprise receiving a scheduling grant for the at least one queue from the base station.

The apparatus may comprise means for causing quality of service information to be sent after receiving a scheduling grant for the at least one queue.

The apparatus may comprise means for causing quality of service information to be sent when there is a change in the at least one queue.

The apparatus may comprise means for causing quality of service information to be sent when data arrives in the at least one queue.

The apparatus may comprise means for causing quality of service information to be sent when a head of line data packet is discarded.

The apparatus may comprise means for causing quality of service information to be sent with scheduled data.

The apparatus may comprise means for causing quality of service information to be sent in a dedicated message.

The apparatus may comprise means for causing quality of service information to be sent with a buffer status report.

In a fourth aspect there is provided an apparatus, said apparatus comprising means for, for a plurality of applications, at least one queue associated with a respective application, receiving, at a base station, quality of service information associated with the respective application.

Means for receiving quality of service information associated with the respective application to be provided to the base station may comprise means for receiving, at the base station, quality of service information associated with the at least one queue.

The apparatus may comprise means for receiving, at a scheduler in the base station, quality of service information associated with the respective application.

Quality of service information may comprise buffer information.

Quality of service information comprises head of line delay information.

The apparatus may comprise means for causing a scheduling grant for the at least one queue to be sent.

The apparatus may comprise means for receiving quality of service information after causing a scheduling grant for the at least one queue to be sent.

The apparatus may comprise means for receiving quality of service information when there is a change in the at least one queue.

The apparatus may comprise means for receiving quality of service information when data arrives in the at least one queue.

The apparatus may comprise means for receiving quality of service information when a head of line data packet is discarded.

The apparatus may comprise means for receiving quality of service information with scheduled data.

The apparatus may comprise means for receiving quality of service information in a dedicated message.

The apparatus may comprise means for receiving quality of service information with a buffer status report.

In a fifth aspect there is provided an apparatus, said apparatus comprising at least one processor, and at least one memory including computer program code, the at least one memory and the computer program code configured to, with the at least one processor, cause the apparatus at least to, for a plurality of applications, at least one queue associated with a respective application, enable quality of service information associated with the respective application to be provided to a base station.

The apparatus may be configured to enable quality of service information associated with the at least one queue to be provided to the base station.

The apparatus may be configured to cause quality of service information associated with the respective application to be provided to the base station.

The apparatus may be configured to enable quality of service information associated with the respective application to be provided to a scheduler in the base station.

Quality of service information may comprise buffer information.

Quality of service information comprises head of line delay information.

The apparatus may be configured to receive a scheduling grant for the at least one queue from the base station.

The apparatus may be configured to cause quality of service information to be sent after receiving a scheduling grant for the at least one queue.

The apparatus may be configured to cause quality of service information to be sent when there is a change in the at least one queue.

The apparatus may be configured to cause quality of service information to be sent when data arrives in the at least one queue.

The apparatus may be configured to cause quality of service information to be sent when a head of line data packet is discarded.

The apparatus may be configured to cause quality of service information to be sent with scheduled data.

The apparatus may be configured to cause quality of service information to be sent in a dedicated message.

The apparatus may be configured to cause quality of service information to be sent with a buffer status report.

In a sixth aspect there is provided an apparatus, said apparatus comprising at least one processor, and at least one memory including computer program code, the at least one memory and the computer program code configured to, with the at least one processor, cause the apparatus at least to, for a plurality of applications, at least one queue associated with a respective application, receiving, at a base station, quality of service information associated with the respective application.

The apparatus may be configured to receive, at the base station, quality of service information associated with the at least one queue.

The apparatus may be configured to receive, at a scheduler in the base station, quality of service information associated with the respective application.

Quality of service information may comprise buffer information.

Quality of service information comprises head of line delay information.

The apparatus may be configured to cause a scheduling grant for the at least one queue to be sent.

The apparatus may be configured to receive quality of service information after causing a scheduling grant for the at least one queue to be sent.

The apparatus may be configured to receive quality of service information when there is a change in the at least one queue. The apparatus may be configured to receive quality of service information when data arrives in the at least one queue.

The apparatus may be configured to receive quality of service information when a head of line data packet is discarded.

The apparatus may be configured to receive quality of service information with scheduled data.

The apparatus may be configured to receive quality of service information in a dedicated message.

The apparatus may be configured to receive quality of service information with a buffer status report.

In a seventh aspect there is provided a computer program comprising computer executable instructions which when run on one or more processors perform the method of the first or second aspect.

In the above, many different embodiments have been described. It should be appreciated that further embodiments may be provided by the combination of any two or more of the embodiments described above.

Figure 1 shows a schematic diagram of an example communication system comprising a base station and a plurality of communication devices;

Figure 2 shows a schematic diagram, of an example mobile communication device;

Figure 3 shows a block diagram of a communication system;

Figure 4 shows a block diagram of a communication system;

Figure 5 shows a flowchart of a method of providing QoS information to a scheduler;

Figure 6 shows a block diagram of an example communication system for performing the method of figure 5;

Figure 7 shows a block diagram of an example communication system for performing the method of figure 5;

Figure 8 shows a schematic diagram of an example control apparatus;

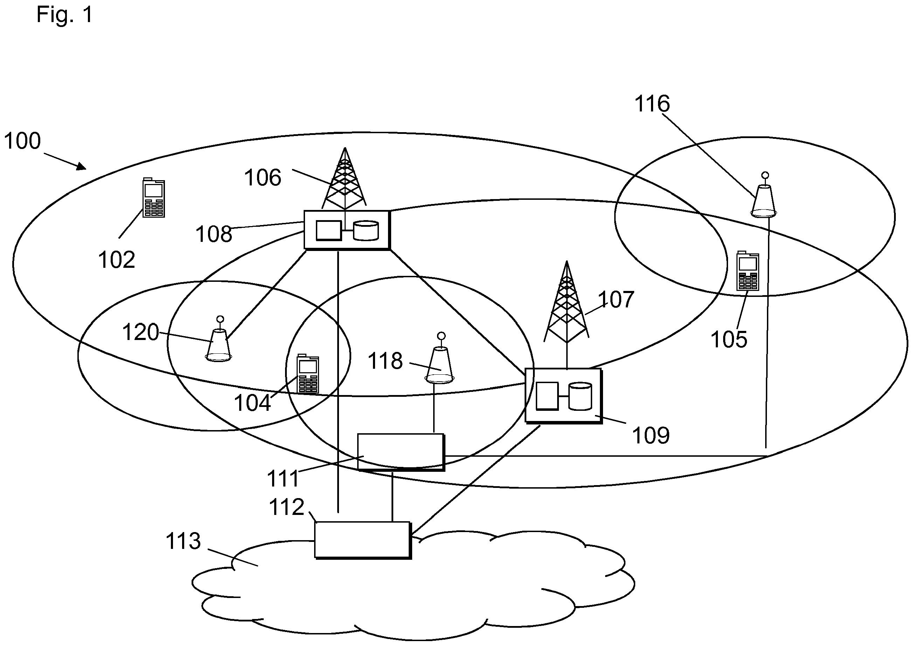

Before explaining in detail the examples, certain general principles of a wireless communication system and mobile communication devices are briefly explained with reference to Figures 1 to 2 to assist in understanding the technology underlying the described examples.

In a communication system a user can be provided with a mobile communication device that can be used for accessing various services and/or applications. The access can be provided via an access interface between the mobile communication device and an appropriate wireless access system of a communication system comprising an access node. An access node or network entity (NE) can be provided by a base station. The term base station will be used in the following and is intended to include the use of any of these network access nodes or any other suitable network entity. In a wireless communication system 100, such as that shown in figure 1, mobile communication devices or user equipment (UE) 102, 104, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (not shown) and may be implemented as one central apparatus or its functionality may be distributed over several apparatus. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided.

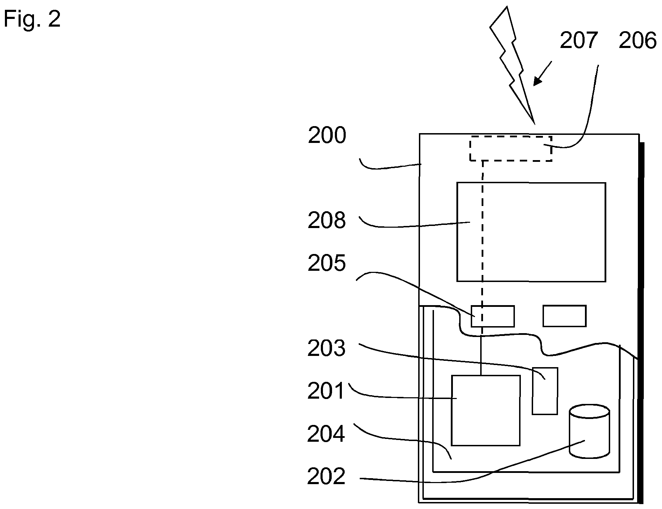

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples include a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. Users may also be provided broadcast or multicast data. Non-limiting examples of the content include downloads, television and radio programs, videos, advertisements, various alerts and other information.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto. A mobile device may also comprise a device without its own user interface, for example, machines, cars, USB dongles and other devices without their own user interface.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA), or any combination of the aforementioned list of non-limiting examples.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE employs a mobile architecture known as the Evolved Universal Terrestrial Radio Access Network (E-UTRAN). Base stations of such systems are known as evolved or enhanced Node Bs (eNBs) and provide E-UTRAN features such as user plane Radio Link Control/Medium Access Control /Physical layer protocol (RLC/MAC/PHY) and control plane Radio Resource Control (RRC) protocol terminations towards the communication devices. Other examples of radio access system include those provided by base stations of systems that are based on technologies such as wireless local area network (WLAN) and/or WiMax (Worldwide Interoperability for Microwave Access) . A base station can provide coverage for an entire cell or similar radio service area.

In mobile communication systems, schedulers may be used to decide the amount of bandwidth to be allocated to a user and at what point in time to allocate the bandwidth.

A media access control (MAC) scheduler may decide which user is served on which part of the bandwidth and at which time. The scheduler such as a MAC scheduler may be able to manage the quality of service (QoS) among different users and/or maximise spectral efficiency through multi-user diversity.

Multi-user diversity may lead to spectral efficiency gain from UMTS Rel99 (by exploiting the time domain) and from HSPA towards LTE (by exploiting the frequency domain).

Managing QoS among users may require ensuring any service is satisfied according to its requirements. For example, in LTE, a system offers "IP based access" to two application/service domains; IP multimedia services (IMS) and the Internet. Each IMS application is mapped to its own enhanced packet service (EPS) bearers so that its QoS requirements can be fulfilled. All Internet applications may be mapped to a single "best effort" EPS bearer.

A single user may use multiple applications within a service, and multiple services, with differing requirements, in parallel. As users can request multiple services in parallel, where each service has a different QoS requirement from another service, it can be difficult to provide efficient scheduling fulfilling all QoS requirements.

Examples of applications include, amongst others, video streaming, web browsing, OTT or IMS VoIP, gaming, vehicular traffic control and safety, video conferencing and file download.

Not all combinations of the aforementioned applications will run in parallel. However, application diversity is increasing. A single user may have, for example, a video stream, a VoIP call and file download running simultaneously. Tethering scenarios, where a single 3G/LTE smartphone (or similar device) is configured as a WLAN access point such that multiple WLAN users connect to it, may also be possible.

To fulfil the specific requirements of applications in addition to those of services, it may be useful to distinguish application data flows within service flows (e.g. internet EPS bearer) and/or provide application specific QoS information to the scheduler.

In the downlink (DL), a scheduler may be implemented in a base station. The data for different users may also arrive and be queued at a base station.

A deep packet inspection (DPI) may be used in the core network to derive information on what type of application data flows in the EPS bearer and communicate to a base station using packet marking (e.g. differentiated services code points (DSCP)). A scheduler may thus be provided with up-to-date QoS information per application data flow. QoS information may include, amongst others, the delay of head of line (HOL) packet (i.e. the time the next packet to be transmitted has spent in a buffer), the amount of data in a buffer and priority.

The information derived from the DPI (i.e. applications within an EPS bearer) may not be straightforward to utilise since current systems were designed to serve the requirements of services rather than performing in-service differentiation. The nature of internet applications may be unpredictable and using dedicated EPS bearers for each internet application may not be a suitable approach for providing per application QoS. In fact, continuous setup/releases of an EPS bearer due to the unpredictable application behaviour may create unnecessary overhead and/or may introduce delays that could hinder an application performance.

Providing up-to-date QoS information per application data flow in uplink may be more complicated since initially, the instantaneous QoS information is in the UE. There may be a need to limit the overhead generated by scheduling requests. A network may not trust UE operating system packet marking and no packet classification and marking (e.g. DPI or pattern recognition) can be currently assumed in the UE and BS (even though it is desirable). Scheduling decisions may still be done in the BS to benefit from multi-user diversity and manage QoS between users.

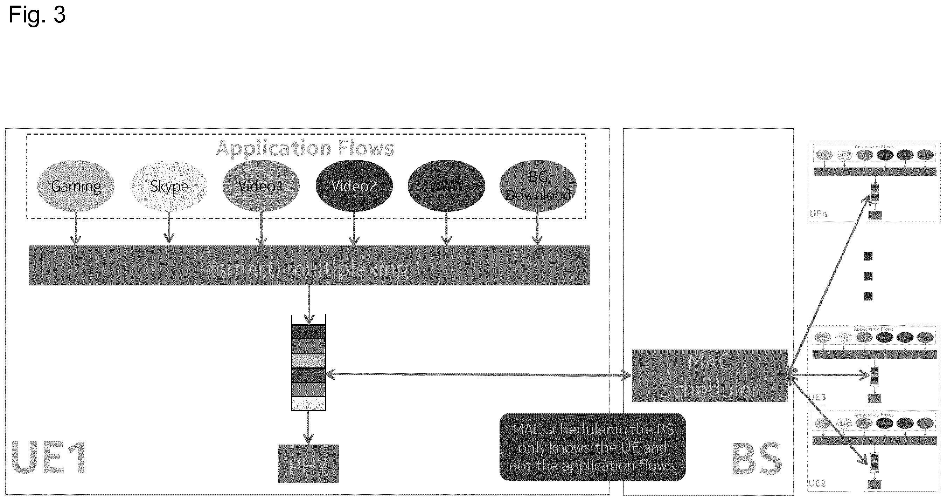

Figure 3 shows a block diagram of a situation in which a base station uplink scheduler is not aware of the details of the different applications (belonging to a single or to different services). The scheduler may schedule users (and not applications) by signalling a scheduling grant, and the UE may decide which applications will exploit this grant, (i.e. which applications will transmit). The UE functionality deciding which application is allowed to transmit may be known as "smart multiplexing".

Without instantaneous information, a BS scheduler may assign resources to users which do not have data in the buffer at all. In the case, the assigned resources may be wasted. Buffer status reports (BSR) may be used, for example in 3G and LTE. The UE informs the BS about how much data it already has in the buffer. Providing BSRs may use uplink capacity but may avoid scheduling empty users. It may also allow prioritising users with more data in a buffer against users with less data in a buffer. A BSR may be transmitted regularly. The BSR may be event driven (e.g. when new data arrives). The BSR may be transmitted in a dedicated uplink control channel (e.g. PUCCH). The BSR may be piggy-backed to data packets for efficiency.

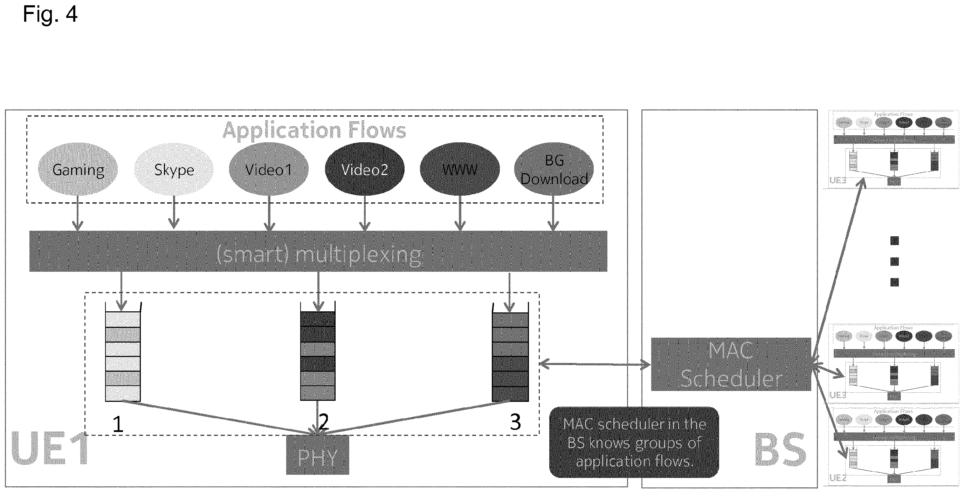

Different services and applications (within a service) may be mapped to different queues. The scheduler may be able to optimise the QoS requirement of each service as well as multi-user diversity. Figure 4 shows an example in which a number, for example three, parallel queues or buffers may be scheduled. Each buffer may be associated with applications with certain properties. The properties may be known to the base station. A BSR is provided individually for each queue. The number of queues may be limited to save signalling. As a result, depending on the number of applications, multiple applications (i.e. application data flows within a service) may be mapped to a single queue. For example, in figure 4, there is shown a possible allocation of groups of applications to three available queues. For example, queue 1 for gaming and skype, queue 2 for video, and queue 3 for web browsing and file download. A scheduler in the BS may know the groups of application data flows via configuration information that can be static or dynamic, general (i.e. valid for all users), or user specific.

Some sort of packet classification in UL and marking in the modem (i.e. the operator controllable part of the UE) and in the BS would be desirable. A BS may then be able to verify the marking done in the modem. Misuse of packet marking may be prevented by applying different charging for different service levels (rather than checking the marking in the BS). This approach may require the UE to request and be granted usage of network resources for a specific application (in-service data flow).

If only the BSR is available to the scheduler, the BS scheduler is not aware of the delay of the HOL packets.

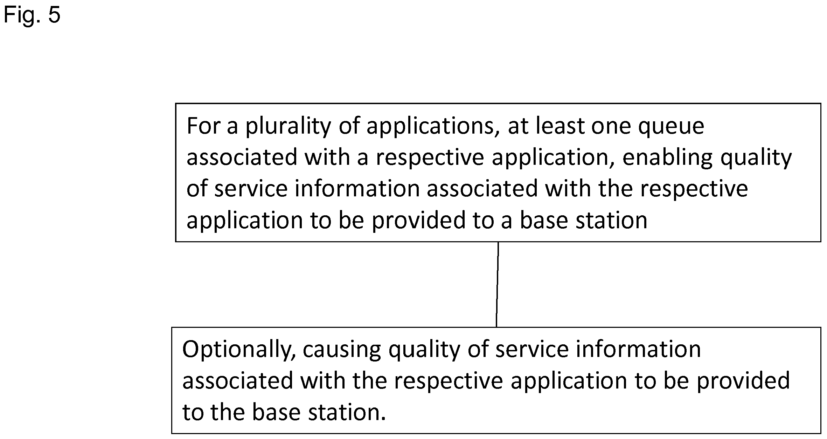

Figure 5 shows a method of providing instantaneous QoS information from a UE to a scheduler, for example a BS scheduler. The method comprises, for a plurality of applications, at least one queue being associated with a respective application, enabling quality of service information associated with the respective application to be provided to a base station. The QoS information may be provided to an uplink scheduler in the base station. In particular the delay of the HOL packet may be provided. Other delay information and/or buffer information may also be provided. The queue may be a scheduling queue in a UE. QoS information associated with the at least one queue may be provided to the base station. The method may comprise causing quality of service information associated with the respective application to be provided to a base station. The idea proposes that a UE makes a one to one mapping of an individual application to a scheduling queue and provides dynamic QoS information per queue, and thereby per application, to a base station. Application specific metrics may thus be provided to a scheduler in the base station, which in turn can then schedule between different users,' and/or application, requirements.

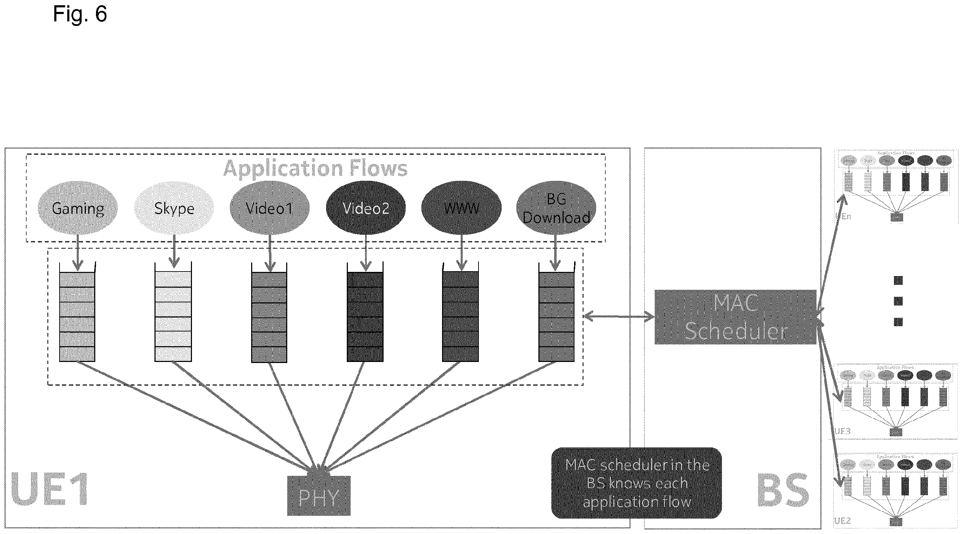

The UE may make one-to-one mapping from application data flows (instances) to scheduler queues. Figure 6 shows a block diagram of how a UE may make a one-to-one mapping from application data flows (instances) such as gaming, VoIP (e.g. Skype), a first video, a second video (i.e. two instances of the same application, corresponding to two application data flows), web browsing and background download into a buffer or scheduler queue. A scheduler in the BS may know the association of application data flows to a respective queue via configuration information that can be static or dynamic, general (i.e. valid for all users), or user specific.

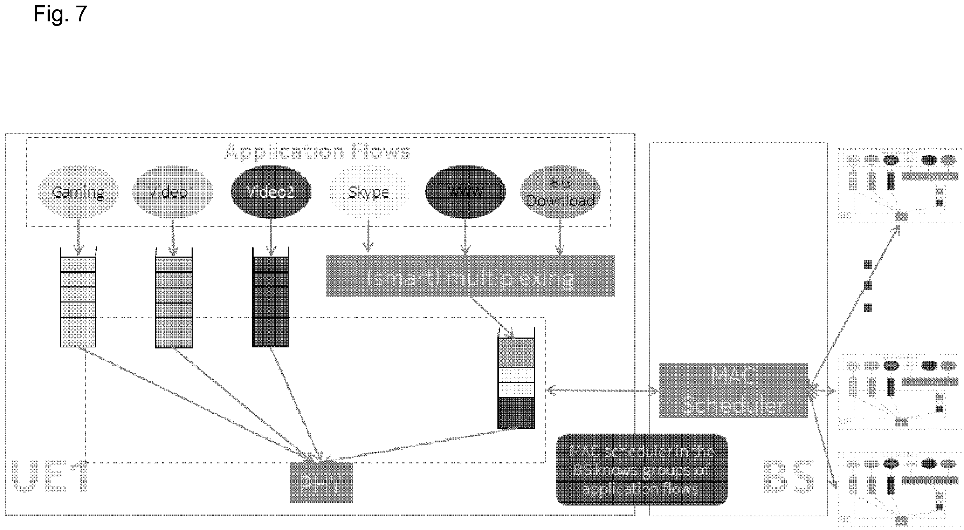

In order to save resources, one-to-one mapping may only be performed when necessary. For example, one-to-one mapping may be done at least for applications for which the presence of the information (e.g. HOL delay information) is helpful, for example, highly delay critical applications. As shown in figure 7, other application flow instances may be mixed in the same scheduler queue. In figure 7, application data flows from a gaming application, a first video application and a second video application are mapped to a respective scheduler queue. That is each queue is associated with a respective application. Application data flows from a VoIP application, browser application and background download are multiplexed in the same queue. It is not possible to provide QoS information, such as HOL delay information, for a case where application data flows are mixed in the same queue.

Providing buffer information may increase uplink signalling. Buffer information may be signalled to a BS for all application data flows (instances). In order to save resources and signalling, HOL delay, or QoS information, reporting may be done only when necessary. HOL delay may only need to be signalled when it changes.

Delay information may be sent after receiving a scheduling grant for a respective queue. Delay information may be sent with scheduled data. For example, if a specific queue is scheduled, HOL delay may be piggybacked to the data as it is transmitted (which may make overhead negligible).

Delay information may be sent when data arrives in a respective queue. Delay information may be sent with a BSR. If new data arrives in an empty queue, a BSR may be sent. The HOL delay can be sent with the BSR (which may reduce overhead requirements).

Delay information may be sent when a head of line data packet is discarded. Delay information could be sent in a dedicated message. If a HOL packet is discarded, extra signalling may be defined (to signal the discard) or the discard may be ignored.

Alternatively, or in addition, a scheduler may autonomously increase the last received value for the HOL delay with time to update its knowledge while no new HOL reports are received.

If the one-to-one mapping from application data flow (application instance) to scheduler queue is to be avoided for any reason (e.g. maximum number of concurrent data flows is limited) the HOL delay information may be sent only when it makes sense, i.e. for the queues allocated to a single application data flow. The identifier may indicate to the scheduler the corresponding QoS requirement that the HOL delay may be compared with.

The scheduler may send individual grants for each scheduler queue in dependence on the application information.

A scheduler may be a BS scheduler, implemented in a BS, for example an eNB. In particular the scheduler may be a MAC scheduler. A scheduler may, alternatively or in addition, be implemented in a network coordination node. In this case the QoS information may be provided to the network coordination node. The QoS information may be provided to any suitable function other than a packet scheduler (e.g. a radio resource management (RRM) entity).

All relevant information may be provided to a central uplink scheduler. It can then optimise QoS between users and between individual services and applications within a service. The method described above helps to keep signalling overhead moderate while achieving this.

Since the queues are one-to-one mapped to an application, rather than a group of applications of a single service, HOL delay knowledge is enabled. That is, any HOL delay information can be associated with a QoS requirement without additional information on the corresponding application. This HOL information can be used in the uplink, as well as in the downlink. Knowledge of HOL delay increases the ability to guarantee highly delay critical applications such as:

- Tactile (haptic) Internet
- Gaming
- Low latency device to device communication

Typical scheduler implementation may calculate a scheduler metric, M, for each of the queues, and potentially also per frequency chunk if frequency selective scheduling is applied. The service/user with the largest scheduling metric would be scheduled in the current timeslot f and potentially on the frequency chunk of interest. The scheduler metric may consider the following aspects:

- Channel dependent part, e.g. a classical proportional fair metric:

$$M_{PF}(t,f) = \frac{instantaneous\ channel\ quality}{average\ channel\ quality}$$

The better the channel is compared with its average, the higher the metric.

- Guaranteed Bit Rate Requirement (would not depend on frequency):

$$M_{GBR}(t) = \frac{Guaranteed\ Bit\ Rate}{Bit\ Rate\ received\ in\ the\ past}$$

The smaller the actual bit rate was in the past with respect to the GBR, the higher the metric (and vice versa).

- Delay Requirement (independent of frequency)

$$M_{HOL}(t) = e^{\frac{HOL\ Delay}{Constant}}$$

The larger the HOL delay, the higher the metric. The constant adjusts the point when the metric starts increasing dramatically.

Such a per-application data flow allocation of queues allows for prioritising a delay sensitive application of a user (such as gaming) and reducing the priority of, for example a background download.

Degrees of freedom may be left to the terminal. With the scheduling scheme described above, a single terminal may receive individual scheduling grants for different application data flows. The terminal may use a grant created for one application (queue) for another application instead. This may be useful if delay critical packets arrive after sending corresponding HOL information.

Boosts in spectral efficiency can be achieved in the uplink when HOL delay information is included. The presence of HOL delays may allow for significantly more efficient provision of video streaming services, since the whole delay budget (given by playout buffer) could be exploited. It may be possible to prioritize one video stream (which is close to the playout buffer) over another video stream with an uncritical playout situation of the same user.

It should be understood that each block of the flowchart of Figure 5 and any combination thereof may be implemented by various means or their combinations, such as hardware, software, firmware, one or more processors and/or circuitry.

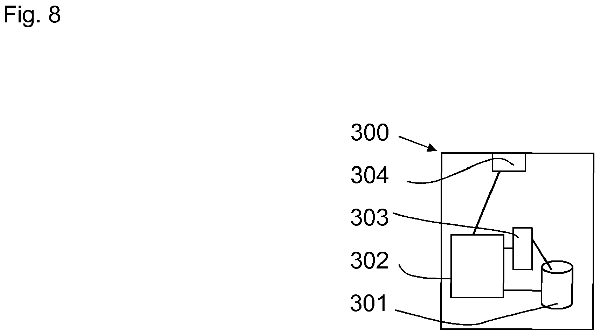

Steps of the method of figure 5 may be implemented on a mobile device as described with respect to figure 2. A scheduler may be implemented on a control apparatus as shown in figure 8. Figure 8 shows an example of a control apparatus for a communication system, for example to be coupled to and/or for controlling a station of an access system, such as a base station or (e) node B. The method may be implemented in a single control apparatus or across more than one control apparatus. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 109 can be arranged to provide control on communications in the service area of the system. The control apparatus 109 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head. For example the control apparatus 109 can be configured to execute an appropriate software code to provide the control functions.

It should be understood that the control apparatuses may include or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to 3G/LTE/LTE-A or 5G, similar principles can be applied in relation to other networks and to any other communication system where QoS scheduling is used. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they include program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), FPGA, gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more embodiments with any of the other embodiments previously discussed.

**Claims**

1. A method comprising: for a plurality of applications, at least one queue associated with a respective application of said plurality;

   receiving at a user equipment (102, 104, 105, 200) a scheduling grant for the at least one queue from a base station (106, 107);
   enabling quality of service information associated with the respective application of said plurality to be provided by the user equipment (102, 104, 105, 200) to the base station (106, 107) after receiving the scheduling grant for the at least one queue, the quality of service information comprising head of line delay information, the quality of service information associated with the respective application of said plurality being provided to a scheduler (109) in the base station (106, 107).

2. A method according to claim 1, wherein enabling the quality of service information associated with the respective application to be provided to the base station (106, 107) comprises enabling quality of service information associated with the at least one queue to be provided to the base station.

3. A method according to claim 1 or claim 2 comprising: causing the quality of service information associated with the respective application to be provided to the base station (106, 107).

4. A method according to any preceding claim, wherein the quality of service information comprises buffer information.

5. A method according to any preceding claim, comprising: causing the quality of service information to be sent when there is a change in the at least one queue.

6. A method according to claim 5, comprising: causing the quality of service information to be sent when data arrives in the at least one queue.

7. A method according to claim 5, comprising: causing the quality of service information to be sent when a head of line data packet is discarded.

8. A method according to any one of claims 1 to 7, comprising: causing the quality of service information to be sent with scheduled data.

9. A method according to any one of claims 1 to 7, comprising: causing the quality of service information to be sent in a dedicated message.

10. An apparatus (102, 104, 105, 200), said apparatus comprising means, the means arranged to, for a plurality of applications, at least one queue associated with a respective application of said plurality,

receive a scheduling grant for the at least one queue from a base station (106, 107);
enable quality of service information associated with the respective application of said plurality to be provided to the base station (106, 107) after receiving the scheduling grant for the at least one queue, the quality of service information comprising head of line delay information, the quality of service information associated with the respective application of said plurality being provided to a scheduler (109) in the base station (106, 107).

11. An apparatus (102, 104, 105, 200) according to claim 10, wherein said apparatus is a user equipment (102, 104, 105, 200).

12. A computer program comprising computer executable instructions, which when run on one or more processors together with the required additional hardware, perform the method of any of claims 1 to 9.

13. A method comprising: for a plurality of applications, at least one queue associated with a respective application of said plurality;
receiving at a base station (106, 107) quality of service information associated with the respective application of said plurality from a user equipment (102, 104, 105, 200), after causing a scheduling grant for the at least one queue to be transmitted to the user equipment (102, 104, 105, 200), the quality of service information comprising head of line delay information, the quality of service information associated with the respective application of said plurality being provided to a scheduler (109) in the base station (106, 107).

14. An apparatus (106, 107), said apparatus (106, 107) comprising means, the means arranged to, for a plurality of applications, at least one queue associated with a respective application of said plurality;
receive quality of service information associated with the respective application of said plurality from a user equipment (102, 104, 105, 200), after causing a scheduling grant for the at least one queue to be transmitted to the user equipment (102, 104, 105, 200), the quality of service information comprising head of line delay information, the quality of service information associated with the respective application of said plurality being provided to a scheduler (109) in apparatus (106, 107).

15. An apparatus (106, 107) according to claim 14, wherein said apparatus is a base station (106, 107).

**Patentansprüche**

1. Verfahren, das Folgendes umfasst: für eine Vielzahl von Anwendungen mindestens eine Warteschlange, die mit einer jeweiligen Anwendung der Vielzahl verknüpft ist;

Empfangen einer Planungsgewährung für die mindestens eine Warteschlange an einer Teilnehmereinrichtung (102, 104, 105, 200) von einer Basisstation (106, 107);
Ermöglichen, dass nach Empfangen der Planungsgewährung für die mindestens eine Warteschlange der Basisstation (106, 107) Dienstqualitätsinformationen, die mit der jeweiligen Anwendung der Vielzahl verknüpft sind, durch die Teilnehmereinrichtung (102, 104, 105, 200) bereitgestellt werden, wobei die Dienstqualitätsinformationen Head-of-Line-Verzögerungsinformationen umfassen, wobei die Dienstqualitätsinformationen, die mit der jeweiligen Anwendung der Vielzahl verknüpft sind, einem Planer (109) in der Basisstation (106, 107) bereitgestellt werden.

2. Verfahren nach Anspruch 1, wobei das Ermöglichen, dass die mit der jeweiligen Anwendung verknüpften Dienstqualitätsinformationen der Basisstation (106, 107) bereitgestellt werden, das Ermöglichen, dass mit der mindestens einen Warteschlange verknüpfte Dienstqualitätsinformationen für die Basisstation bereitgestellt werden.

3. Verfahren nach Anspruch 1 oder Anspruch 2, das Folgendes umfasst: Veranlassen, dass die mit der jeweiligen Anwendung verknüpften Dienstqualitätsinformationen der Basisstation (106, 107) bereitgestellt werden.

4. Verfahren nach einem der vorhergehenden Ansprüche, wobei die Dienstqualitätsinformationen Pufferinformationen umfassen.

5. Verfahren nach einem der vorhergehenden Ansprüche, das Folgendes umfasst: Veranlassen, dass die Dienstqualitätsinformationen bei Auftreten einer Änderung in der mindestens einen Warteschlange gesendet werden.

6. Verfahren nach Anspruch 5, das Folgendes umfasst: Veranlassen, dass die Dienstqualitätsinformationen gesendet werden, wenn in der mindestens einen Warteschlange Daten ankommen.

7. Verfahren nach Anspruch 5, das Folgendes umfasst:

Veranlassen, dass die Dienstqualitätsinformationen gesendet werden, wenn ein Head-of-Line-Datenpaket verworfen wird.

8. Verfahren nach einem der Ansprüche 1 bis 7, das Folgendes umfasst: Veranlassen, dass die Dienstqualitätsinformationen mit geplanten Daten gesendet werden.

9. Verfahren nach einem der Ansprüche 1 bis 7, das Folgendes umfasst: Veranlassen, dass die Dienstqualitätsinformationen in einer dedizierten Nachricht gesendet werden.

10. Vorrichtung (102, 104, 105, 200), wobei die Vorrichtung Mittel umfasst, wobei die Mittel für eine Vielzahl von Anwendungen zu Folgendem angeordnet sind, wobei die mindestens eine Warteschlange mit einer jeweiligen Anwendung der Vielzahl verknüpft ist,

Empfangen einer Planungsgewährung für die mindestens eine Warteschlange von einer Basisstation (106, 107);
Ermöglichen, dass nach Empfangen der Planungsgewährung für die mindestens eine Warteschlange der Basisstation (106, 107) Dienstqualitätsinformationen, die mit der jeweiligen Anwendung der Vielzahl verknüpft sind, bereitgestellt werden, wobei die Dienstqualitätsinformationen Head-of-Line-Verzögerungsinformationen umfassen, wobei die Dienstqualitätsinformationen, die mit der jeweiligen Anwendung der Vielzahl verknüpft sind, einem Planer (109) in der Basisstation (106, 107) bereitgestellt werden.

11. Vorrichtung (102, 104, 105, 200) nach Anspruch 10, wobei die Vorrichtung eine Teilnehmereinrichtung (102, 104, 105, 200) ist.

12. Computerprogramm, das computerausführbare Anweisungen umfasst, die, wenn sie auf einem oder mehreren Prozessoren zusammen mit der erforderlichen zusätzlichen Hardware ausgeführt werden, das Verfahren von einem der Ansprüche 1 bis 9 durchführen.

13. Verfahren, das Folgendes umfasst: für eine Vielzahl von Anwendungen mindestens eine Warteschlange, die mit einer jeweiligen Anwendung der Vielzahl verknüpft ist;
Empfangen von Dienstqualitätsinformationen, die mit der jeweiligen Anwendung der Vielzahl verknüpft sind, an einer Basisstation (106, 107) von einer Teilnehmereinrichtung (102, 104, 105, 200) nach Veranlassen, dass eine Planungsgewährung für die mindestens eine Warteschlange zur Teilnehmereinrichtung (102, 104, 105, 200) übertragen wird, wobei die Dienstqualitätsinformationen Head-of-Line-Verzögerungsinformationen umfassen, wobei die Dienstqualitätsinformationen, die mit der jeweiligen Anwendung der Vielzahl verknüpft sind, einem Planer (109) in der Basisstation (106, 107) bereitgestellt werden.

14. Vorrichtung (106, 107), wobei die Vorrichtung (106, 107) Mittel umfasst, wobei die Mittel für eine Vielzahl von Anwendungen zu Folgendem angeordnet sind, wobei die mindestens eine Warteschlange mit einer jeweiligen Anwendung der Vielzahl verknüpft ist;
Empfangen von Dienstqualitätsinformationen, die mit der jeweiligen Anwendung der Vielzahl verknüpft sind, von einer Teilnehmereinrichtung (102, 104, 105, 200) nach Veranlassen, dass eine Planungsgewährung für die mindestens eine Warteschlange zur Teilnehmereinrichtung (102, 104, 105, 200) übertragen wird, wobei die Dienstqualitätsinformationen Head-of-Line-Verzögerungsinformationen umfassen, wobei die Dienstqualitätsinformationen, die mit der jeweiligen Anwendung der Vielzahl verknüpft sind, einem Planer (109) in der Vorrichtung (106, 107) bereitgestellt werden.

15. Vorrichtung (106, 107) nach Anspruch 14, wobei die Vorrichtung eine Basisstation (106, 107) ist.

**Revendications**

1. Procédé comprenant : pour une pluralité d'applications, au moins une file d'attente étant associée à une application respective de ladite pluralité ;

la réception sur un équipement utilisateur (102, 104, 105, 200) d'une autorisation d'ordonnancement pour la au moins une file d'attente d'une station de base (106, 107) ;
la possibilité de fournir à la station de base (106, 107) des informations de qualité de service associées à l'application respective de ladite pluralité par l'équipement utilisateur (102, 104, 105, 200) après la réception de l'autorisation d'ordonnancement pour la au moins une file d'attente, les informations de qualité de service comprenant des informations de retard de tête de ligne, les informations de qualité de service associées à l'application respective de ladite pluralité étant fournies à un ordonnanceur (109) dans la station de base (106, 107).

2. Procédé selon la revendication 1, dans lequel la possibilité de fournir à la station de base (106, 107) les informations de qualité de service associées à l'application respective comprend la possibilité de fournir à la station de base des informations de qualité de service associées à la au moins une file d'attente.

**3.** Procédé selon la revendication 1 ou la revendication 2 comprenant : la provocation de la fourniture à la station de base (106, 107) des informations de qualité de service associées à l'application respective.

**4.** Procédé selon l'une des revendications précédentes, dans lequel les informations de qualité de service comprennent des informations de mémoire tampon.

**5.** Procédé selon l'une des revendications précédentes, comprenant : la provocation de l'envoi des informations de qualité de service lorsqu'il y a un changement dans la au moins une file d'attente.

**6.** Procédé selon la revendication 5, comprenant : la provocation de l'envoi des informations de qualité de service lorsque des données arrivent dans la au moins une file d'attente.

**7.** Procédé selon la revendication 5, comprenant : la provocation de l'envoi des informations de qualité de service lorsqu'un paquet de données de tête de ligne est rejeté.

**8.** Procédé selon l'une des revendications 1 à 7, comprenant : la provocation de l'envoi des informations de qualité de service avec des données ordonnancées.

**9.** Procédé selon l'une des revendications 1 à 7, comprenant : la provocation de l'envoi des informations de qualité de service dans un message dédié.

**10.** Appareil (102, 104, 105, 200), ledit appareil comprenant des moyens, les moyens étant agencés pour, pour une pluralité d'applications, au moins une file d'attente étant associée à une application respective de ladite pluralité,

recevoir un autorisation d'ordonnancement pour la au moins une file d'attente d'une station de base (106, 107) ;
permettre de fournir à la station de base (106, 107) des informations de qualité de service associées à l'application respective de ladite pluralité après la réception de l'autorisation d'ordonnancement pour la au moins une file d'attente, les informations de qualité de service comprenant des informations de retard de tête de ligne, les informations de qualité de service associées à l'application respective de ladite pluralité étant fournies à un ordonnanceur (109) dans la station de base (106, 107).

**11.** Appareil (102, 104, 105, 200) selon la revendication 10, dans lequel ledit appareil est un équipement utilisateur (102, 104, 105, 200).

**12.** Programme informatique comprenant des instructions exécutables par ordinateur qui, lorsqu'elles sont exécutées sur un ou plusieurs processeurs ainsi que sur le matériel supplémentaire requis, réalisent le procédé de l'une des revendications 1 à 9.

**13.** Procédé comprenant : pour une pluralité d'applications, au moins une file d'attente étant associée à une application respective de ladite pluralité ;
la réception d'un équipement utilisateur (102, 104, 105, 200), sur une station de base (106, 107), d'informations de qualité de service associées à l'application respective de ladite pluralité, après la provocation de la transmission à l'équipement utilisateur (102, 104, 105, 200) d'une autorisation d'ordonnancement pour la au moins une file d'attente, les informations de qualité de service comprenant des informations de retard de tête de ligne, les informations de qualité de service associées à l'application respective de ladite pluralité étant fournies à un ordonnanceur (109) dans la station de base (106, 107).

**14.** Appareil (106, 107), ledit appareil (106, 107) comprenant des moyens, les moyens étant agencés pour, pour une pluralité d'applications, au moins une file d'attente étant associée à une application respective de ladite pluralité ;
recevoir d'un équipement utilisateur (102, 104, 105, 200) des informations de qualité de service associées à l'application respective de ladite pluralité, après la provocation de la transmission à l'équipement utilisateur (102, 104, 105, 200) d'une autorisation d'ordonnancement pour la au moins une file d'attente, les informations de qualité de service comprenant des informations de retard de tête de ligne, les informations de qualité de service associées à l'application respective de ladite pluralité étant fournies à un ordonnanceur (109) dans l'appareil (106, 107).

**15.** Appareil (106, 107) selon la revendication 14, dans lequel ledit appareil est une station de base (106, 107).

Fig. 1

Fig. 2

Fig. 3

Fig. 4

EP 3 198 813 B1

Fig. 5

For a plurality of applications, at least one queue associated with a respective application, enabling quality of service information associated with the respective application to be provided to a base station

Optionally, causing quality of service information associated with the respective application to be provided to the base station.

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012140633 A
- US 2012327779 A
- US 2005286438 A
- US 2011235630 A
- EP 1434131 A